# EUROPÄISCHE PATENTSCHRIFT

(11) **EP 3 049 297 B1**
(45) Veröffentlichungstag und Bekanntmachung des Hinweises auf die Patenterteilung: **15.07.2020**
(21) Anmeldenummer: 14795607.2
(22) Anmeldetag: 04.11.2014
(51) Int. Cl.: B60T 13/66, B60T 13/68

(54) **BREMSSYSTEM UND VERFAHREN ZUM STEUERN EINES BREMSSYSTEMS**
BRAKE SYSTEM AND METHOD TO CONTROL A BRAKE SYSTEM
SYSTEME A FREINS ET PROCEDE DE CONTROLE D'UN TEL SYSTEME

(30) Priorität: 28.11.2013 DE 102013224421
(43) Veröffentlichungstag der Anmeldung: 03.08.2016
(73) Patentinhaber: Siemens Mobility GmbH, 81739 München (DE)
(72) Erfinder: THÜRER, Matthias, 06130 Halle (DE)
(86) Internationale Anmeldenummer: PCT/EP2014/073671
(87) Internationale Veröffentlichungsnummer: WO 2015/078666

(56) Entgegenhaltungen:
- WO-A1-2005/110830
- DE-A1-102012 202 761

## Beschreibung

Die Erfindung betrifft ein Bremssystem, bei dem zum Betätigen von ersten Bremsmitteln eines Fahrzeugs, welches eine Notlöseschaltung aufweist, ein von einer Bremsanordnung ausgesteuerter Bremsdruck über einen Bremsdruckpfad auf einen Bremsaktuator wirkt.

Die Erfindung betrifft auch einen Fahrzeugverbund, insbesondere einen Schienenfahrzeugverbund, mit einem derartigen Bremssystem.

Die Erfindung betrifft weiterhin ein Verfahren zum Steuern eines Bremssystems, bei dem zum Betätigen von ersten Bremsmitteln eines Fahrzeugs, welches eine Notlöseschaltung aufweist, ein von einer Bremsanordnung ausgesteuerter Bremsdruck über einen Bremsdruckpfad auf einen Bremsaktuator wirkt.

Ein gattungsgemäßes Bremssystem und ein Fahrzeug mit einem derartigen Bremssystem sind beispielsweise aus der Druckschrift DE 10 2012 202 761 A1 bekannt.

Ferner ist aus der Druckschrift WO 2005/110830 A1 ein Bremssystem eines Schienenfahrzeugs bekannt, bei dem ein von einer Bremsanordnung ausgesteuerter Bremsdruck über einen Bremsdruckpfad auf einen Bremsaktuator wirkt.

Ausgehend von dem gattungsgemäßen Bremssystem (DE 10 2012 202 761 A1) bzw. dem gattungsgemäßen Verfahren (DE 10 2012 202 761 A1) liegt der Erfindung die Aufgabe zu Grunde, diese so zu gestalten, dass damit bei einem Abschleppen des Fahrzeugs ein besonders sicheres Notlösen der Bremsmittel, also ein besonders sicheres Aufheben eines Reibschlusses zwischen den ersten Bremsmitteln und ihnen zugeordneten zweiten Bremsmitteln, gewährleistet ist.

Gelöst wird diese Aufgabe durch ein Bremssystem mit den Merkmalen des Patentanspruches 1, bei dem aus der Notlöseschaltung des einen Fahrzeugs, welches ein abzuschleppendes Fahrzeug eines Fahrzeugverbundes ist, und einer Notlöseschaltung eines an das eine Fahrzeug gekuppelten weiteren Fahrzeugs, welches ein abschleppendes Fahrzeug des Fahrzeugverbundes ist, eine gemeinsame Notlöseschaltung als Teil des Bremssystems gebildet ist, bei dem eine mittels der gemeinsamen Notlöseschaltung schaltbare Notlöseventileinrichtung im Zuge des Bremsdruckpfades des abzuschleppenden Fahrzeugs angeordnet ist und bei dem die gemeinsame Notlöseschaltung aktivierbar ist durch Überführen eines ersten Betätigungsmittels des abzuschleppenden Fahrzeugs in eine erste EIN-Stellung und alternativ durch Überführen eines weiteren ersten Betätigungsmittels des abschleppenden Fahrzeugs in eine zweite EIN-Stellung, wobei sich die Notlöseventileinrichtung bei derart aktivierter gemeinsamer Notlöseschaltung in einer ersten Schaltposition befindet, in der sie ein Lösen der ersten Bremsmittel von zweiten Bremsmitteln bewirkt.

Gelöst wird diese Aufgabe auch durch ein Verfahren mit den Merkmalen des Patentanspruches 7, zum Steuern eines Bremssystems bei dem aus der Notlöseschaltung des einen Fahrzeugs, welches ein abzuschleppendes Fahrzeug eines Fahrzeugverbundes ist, und einer Notlöseschaltung eines an das eine Fahrzeug gekuppelten weiteren Fahrzeugs, welches ein abschleppendes Fahrzeug des Fahrzeugverbundes ist, eine gemeinsame Notlöseschaltung gebildet wird, bei dem eine mittels der gemeinsamen Notlöseschaltung schaltbare Notlöseventileinrichtung im Zuge des Bremsdruckpfades des abzuschleppenden Fahrzeugs angeordnet ist, wobei im Verfahren die gemeinsame Notlöseschaltung aktiviert wird, indem ein erstes Betätigungsmittel des abzuschleppenden Fahrzeugs in eine erste EIN-Stellung oder ein weiteres erstes Betätigungsmittels des abschleppenden Fahrzeugs in eine zweite EIN-Stellung überführt wird, und bei dem die Notlöseventileinrichtung durch dieses Aktivieren der gemeinsamen Notlöseschaltung in eine erste Schaltposition überführt wird, in der sie ein Lösen der ersten Bremsmittel von zweiten Bremsmitteln bewirkt.

Vorzugsweise ist die gemeinsame Notlöseschaltung zum Schalten der Notlöseventileinrichtung aktiviert, wenn durch die gemeinsame Notlöseschaltung an einem ersten Steuereingang und an einem zweiten Steuereingang einer Betätigungseinrichtung der Notlöseventileinrichtung jeweils ein vorbestimmtes Steuersignal, insbesondere einen vorbestimmten Wert einer Steuerspannung, bereitstellt ist. - Durch das Aktivieren der gemeinsamen Notlöseschaltung wird also vorzugsweise an einem ersten Steuereingang und an einem zweiten Steuereingang einer Betätigungseinrichtung der Notlöseventileinrichtung jeweils ein vorbestimmtes Steuersignal, insbesondere ein vorbestimmter Wert einer Steuerspannung bereitgestellt.

Es wird als vorteilhaft angesehen, wenn die Betätigungseinrichtung einen dritten mit einer Bezugspotentialleitung verbundenen Steuereingang, einen vierten mit der Bezugspotentialleitung verbundenen Steuereingang und zwei Betätigungselemente aufweist, wobei ein erstes der Betätigungselemente, das in Wirkverbindung mit zwei Schaltkontakten steht, über Verbindungsleitungen mit dem ersten und dem dritten Steuereingang verbunden ist und das andere Betätigungselement, das in Wirkverbindung mit einem im Zuge des Bremsdruckpfades angeordnete Ventil der Notlöseventileinrichtung steht, über weitere Verbindungsleitungen mit dem zweiten und dem vierten Steuereingang verbunden ist und wobei im Zuge der weiteren Verbindungsleitungen jeweils einer der Schaltkontakte angeordnet ist.

Mit Vorteil ist die derart aktivierte gemeinsame Notlöseschaltung durch Überführen eines zweiten Betätigungsmittels des abzuschleppenden Fahrzeugs in eine EIN-Stellung oder durch Ausgabe eines Steuersignals an einem Ausgang eines Ausgabemittels des abzuschleppenden Fahrzeugs deaktivierbar, wobei sich die Notlöseventileinrichtung bei derart deaktivierter gemeinsamer Notlöseschaltung in einer zweiten Schaltposition befindet, in der sie einen Reibschluss der ersten Bremsmittel mit den zweiten Bremsmitteln zulässt. - Die derart aktivierte gemeinsame Notlöseschaltung wird also mit Vorteil deaktiviert, indem ein zweites Betätigungsmittel des anzuschleppenden Fahrzeugs in eine EIN-Stellung überführt wird oder indem ein Steuersignals an einem Ausgang eines Ausgabemittels des abzuschleppenden Fahrzeugs ausgegeben wird, wobei die Notlöseventileinrichtung durch dieses Deaktivieren der gemeinsamen Notlöseschaltung in eine zweite Schaltposition überführt wird, in der sie einen Reibschluss der ersten Bremsmittel mit den zweiten Bremsmitteln zulässt.

Es wird als vorteilhaft angesehen, wenn bei derart deaktivierter gemeinsamer Notlöseschaltung die beiden Steuereingänge kurzgeschlossen sind und ihre Verbindung zu einer Versorgungsleitung, insbesondere einer Spannungsversorgungsleitung, unterbrochen ist, so dass an den beiden Steuereingängen kein Steuersignal, insbesondere keine Steuerspannung, mehr anliegt. - Es wird also als vorteilhaft angesehen, wenn durch das Deaktivieren der gemeinsamen Notlöseschaltung mittels des zweiten Betätigungsmittels oder mittels des Ausgabemittels die beiden Steuereingänge kurzgeschlossen werden und ihre Verbindung zu einer Versorgungsleitung, insbesondere einer Spannungsversorgungsleitung, unterbrochen wird, so dass an den beiden Steuereingängen kein Steuersignal, insbesondere keine Steuerspannung, mehr anliegt.

Zur weiteren Erläuterung der Erfindung sind in der
- Figur 1: ein erfindungsgemäßes Fahrzeug in Form eines Schienenfahrzeug mit einem erfindungsgemäßen Bremssystem mit Notlöseschaltung und mit Notlöseventileinrichtungen, in der
- Figur 2: das Fahrzeug gemäß Figur 1 und ein weiteres erfindungsgemäßes Fahrzeug, die zur Bildung eines Fahrzeugverbundes aneinander kuppelbar sind, in den
- Figuren 3 bis 6: ein Ausschnitt des Fahrzeugverbunds nach der Kupplung der beiden Fahrzeuge in verschiedenen Zuständen des Bremssystems und in der
- Figur 7: der Fahrzeugverbund mit einer detaillierten Darstellung der Notlöseschaltung und der Notlöseventileinrichtungen des einen Fahrzeugs gezeigt.

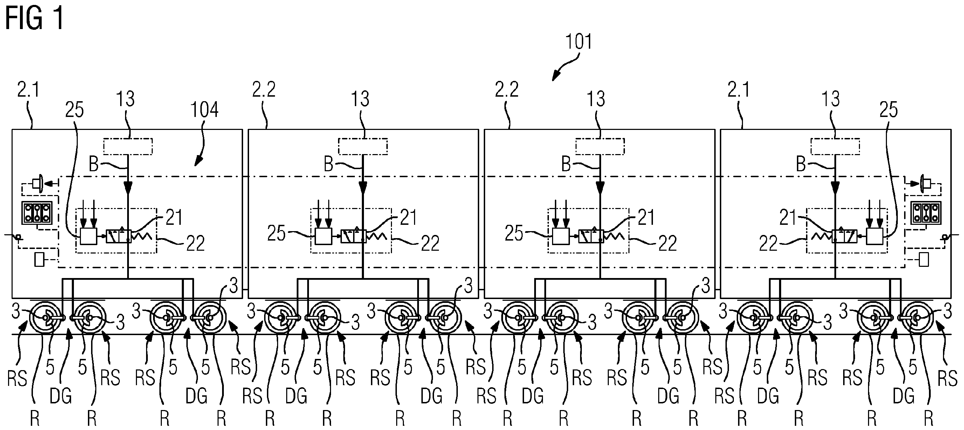

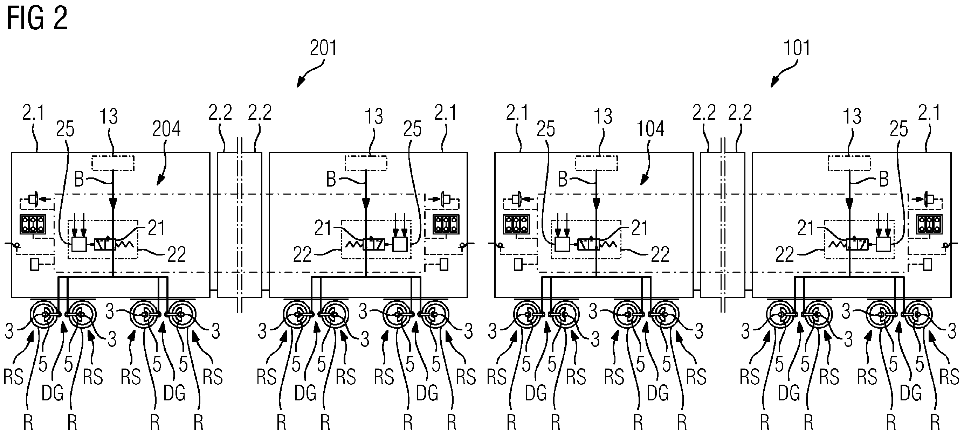

Gemäß den Figuren 1 und 2 verfügen die als Schienenfahrzeuge ausgebildeten Fahrzeuge 101, 201 jeweils über Wagen in Form von Kopfwagen 2.1 und Mittelwagen 2.2, deren Wagenkästen jeweils über eine hier nicht gezeigte Sekundärfederung von zwei Fahrwerken in Form von Drehgestellen DG getragen sind. Die Drehgestelle weisen jeweils zwei Radsätze RS auf. Die Radsätze RS weisen jeweils eine Welle 3 auf, an deren Enden Räder R gehalten sind. Dabei sind die Wellen 3 der Radsätze RS in hier nicht gezeigter Weise in Radsatzlagern drehbar gelagert, die über ein Gehäuse und eine Primärfederung an einem Drehgestellrahmen des jeweiligen Drehgestells DG angebunden sind. Weiterhin verfügen die Schienenfahrzeuge 101, 201 jeweils über ein hier als Ganzes mit 104 bzw. 204 bezeichnetes Bremssystem.

Jeder Welle 3 der Schienenfahrzeuge 101, 201 ist üblicherweise jeweils mindestens eine Bremseinheit 5 des jeweiligen Bremssystems 104 bzw. 204 zugeordnet. Somit verfügt jeder der Wagen 2.1, 2.2 über mindestens vier dieser Bremseinheiten 5.

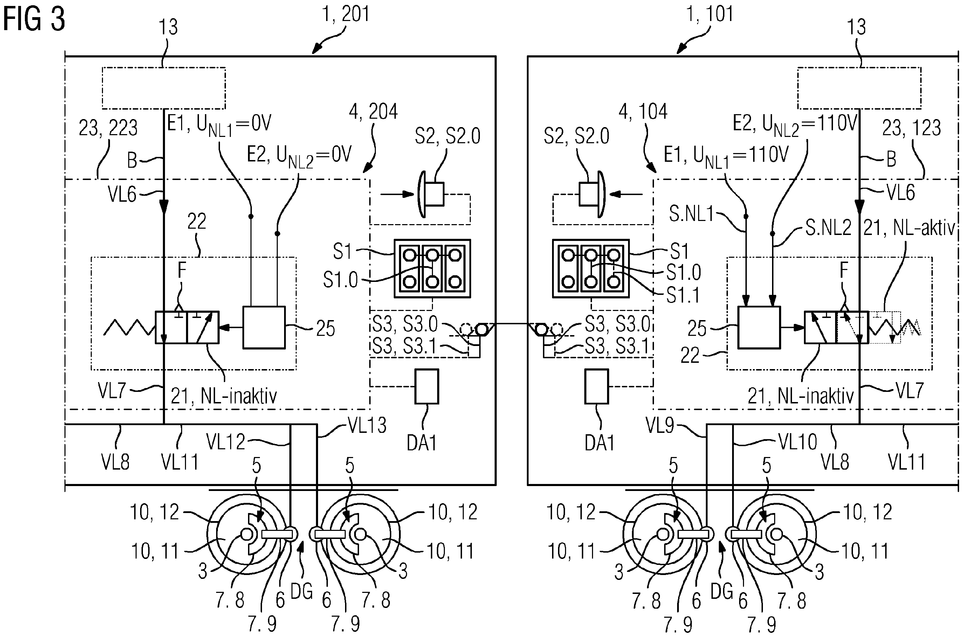

Gemäß Figur 3, die die beiden Fahrzeuge 101 und 201 zu einem Fahrzeugverbund 1 aneinander gekuppelt und die beiden Bremssysteme 104 und 204 zu einem Bremssystem 4 verbunden zeigt, weist jede der Bremseinheiten 5 einen Bremsaktor 6 und vom Bremsaktor 6 betätigte erste Bremsmittel 7 in Form einer mit zumindest einem Bremsbelag 8 versehenen Kraftübertragungsmechanik 9 auf. Dabei wirken die ersten Bremsmittel 7 jeder dieser Bremseinheiten 5 jeweils mit ihnen zugeordneten zweiten Bremsmitteln 10 in Form eines mit der Welle 3 rotierenden und mit zumindest einer Bremsfläche 11 versehenen Bremselementes 12 zusammen.

Die Bremselemente 12 sind hier jeweils als eine Wellenbremsscheibe ausgebildet. Als Bremselemente 12 könnten aber alternativ auch Radbremsscheiben, die Räder R selbst oder auch Bremstrommeln dienen.

Die Kraftübertragungsmechaniken 9 sind hier jeweils als eine mit zwei Bremsbelägen 8 versehene Zuspanneinrichtung in Form einer Bremszange ausgebildet. Die Zuspanneinrichtung könnte aber alternativ auch als Bremssattel ausgebildet sein.

Die mit den Bremsbelägen 8 versehene Kraftübertragungsmechanik 9 ist unter der Einwirkung des Bremsaktors 6 zur Herstellung eines Reibschlusses zwischen den ersten Bremsmitteln 7 und den zweiten Bremsmitteln 10 über dem Bremselement 12 zuspannbar.

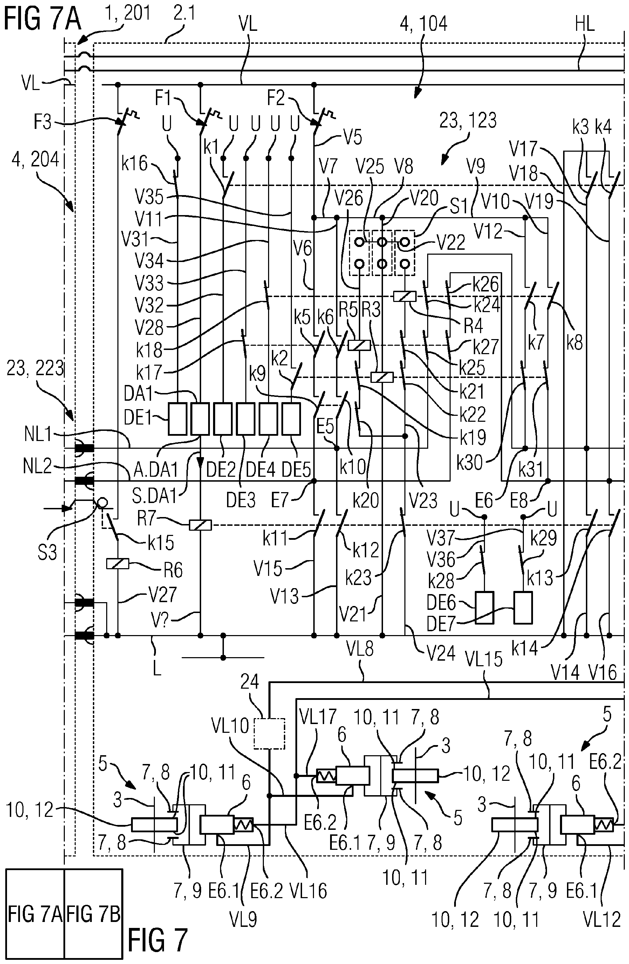

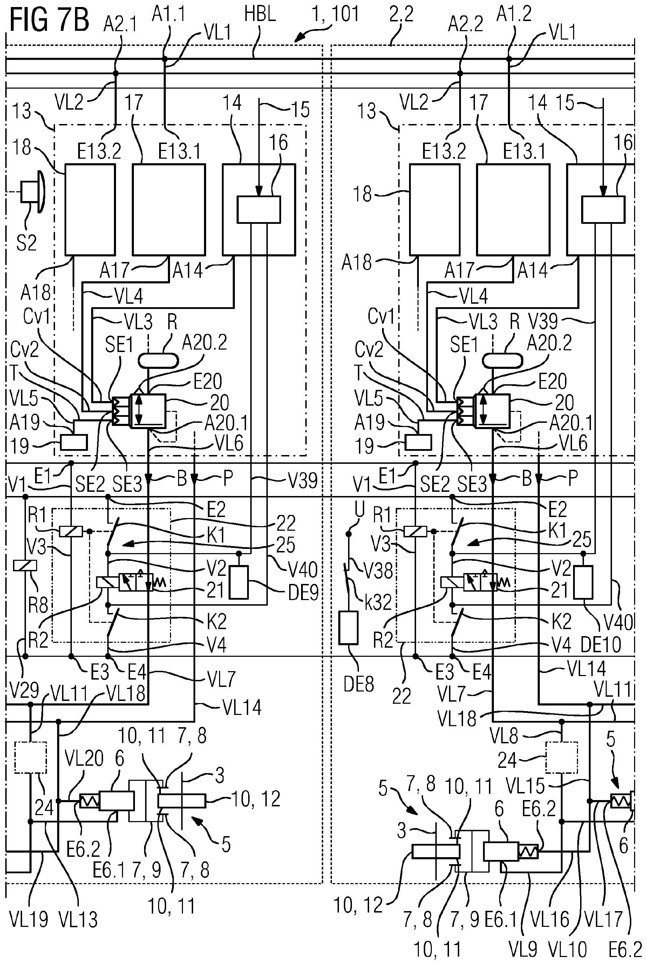

Jeder der Bremsaktoren 6 ist ein mit einem pneumatischen Bremsdruck B beaufschlagbarer Bremsaktor, wobei der Bremsdruck B vor dem Beaufschlagen der Bremsaktoren vorzugsweise einer Gleitschutzkorrektur unterzogen wird (vgl. Figur 7).

Das gezeigte Bremssystem 4 beinhaltet je Wagen eine Bremsanordnung 13 in Form eines Bremssteuermoduls.

Gemäß Figur 7 ist jede der Bremsanordnungen 13 über eine pneumatische Verbindungsleitung VL1, die einen Eingang E13.1 der Bremsanordnungen 13 mit einem Ausgang A1.1; A1.2 einer Hauptluftbehälterleitung HBL verbindet, an die Hauptluftbehälterleitung HBL angeschlossen. Außerdem ist jede der Bremsanordnungen 13 über eine weitere pneumatische Verbindungsleitung VL2, die einen Eingang E13.2 der Bremsanordnungen 13 mit einem Ausgang A2.1; A2.2 einer Hauptluftleitung HL (oder HHL) verbindet, an die Hauptluftleitung HL angeschlossen.

Ferner weist jede der Bremsanordnungen 13 zumindest eine direkt wirkende elektro-pneumatische Bremseinrichtung 14 mit einem von einem Bremsmanagement 15 gesteuerten elektronischen Bremssteuergerät 16 und eine mittels des Druckes in der Hauptluftleitung HL gesteuerte indirekt wirkende Druckluftbremseinrichtung 17 auf, so wie dies beispielsweise aus der eingangs genannten Druckschrift WO 2005/110830 A1 bekannt ist.

Außerdem weist jede der Bremsanordnungen 13 eine Parkbremseinrichtung 18, eine Lasterfassungseinrichtung 19 und eine Ventileinrichtung 20 auf.

Die direkt wirkende elektro-pneumatische Bremseinrichtung 14 gibt insbesondere zur Betriebsbremsung des Schienenfahrzeugs 101 an einem Ausgang A14 über eine Verbindungsleitung VL3 einen ersten Vorsteuerdruck Cv1 an einen ersten Steuereingang SE1 der nachgeschalteten Ventileinrichtung 20 aus. Die indirekt wirkende Druckluftbremseinrichtung 17 gibt insbesondere zur Notbremsung, zur Zwangsbremsung oder zur Schnellbremsung des Fahrzeugs an einem Ausgang A17 über eine Verbindungsleitung VL4 einen zweiten Vorsteuerdruck Cv2 an einen zweiten Steuereingang SE2 der Ventileinrichtung 20 aus. An einem dritten Eingang SE3 der Ventileinrichtung 20 liegt ein Steuersignal in Form eines Tastdruckes T der Lasterfassungseinrichtung 19 an. Den Tastdruck T gibt die Lasterfassungseinrichtung 19 an einem Ausgang A19 über eine Verbindungsleitung VL5 an den Eingang SE3 der Ventileinrichtung 20 aus.

Die Ventileinrichtung 20 dient zur Verstärkung des Volumenstroms. Hierzu ist ein Eingang E20 der Ventileinrichtung 20 an ein in hier nicht gezeigter Weise von der Hauptluftbehälterleitung HBL gespeistes Reservoir R angeschlossen. Die Ventileinrichtung 20 setzt die Vorsteuerdrücke Cv1; Cv2 _ in einem vom Tastdruck T abhängigen Übersetzungsverhältnis - in den Bremsdruck B um und steuert den Bremsdruck B an einem Ausgang A20 aus.

Der von der Ventileinrichtung 20 der Bremsanordnung ausgesteuerte Bremsdruck B wirkt über Bremsdruckpfade in Form der pneumatischen Verbindungsleitungen VL6, VL7, VL8, VL9; VL6, VL7, VL8, VL10; VL6, VL7, VL11, VL12; VL6, VL7, VL11, VL13 auf die Bremsaktuatoren 6 des jeweiligen Wagens. Dabei sind die pneumatischen Verbindungsleitungen VL9, VL10, VL12 und VL13 jeweils an einen ersten Eingang E6.1 des zugeordneten Bremsaktuators 6 angeschlossen.

Ein von der Parkbremseinrichtung 18 ausgesteuerter Parkbremsdruck P wirkt über Parkbremsdruckpfade in Form der pneumatischen Verbindungsleitungen VL14, V1L5, VL16; VL14, VL15, VL17; VL14, VL18, VL19; VL14, VL18, VL20 auf die Bremsaktuatoren 6 des jeweiligen Wagen. Dabei sind die Verbindungsleitungen VL16, VL17, VL19 und VL20 jeweils an einen zweiten Eingang E6.2 des zugeordneten Bremsaktuators 6 angeschlossen.

Im Zuge eines den Bremsdruckpfaden gemeinsamen Abschnittes, der von den Verbindungsleitungen VL6 und VL7 gebildet ist, ist ein Ventil 21 einer Notlöseventileinrichtung 22 angeordnet. Die Notlöseventileinrichtungen 22 der beiden Fahrzeuge 101, 201 sind mittels Notlöseschaltungen 123, 223 des jeweiligen Fahrzeugs und - bei aneinander gekuppelten Fahrzeugen - mittels einer aus den beiden einzelnen Notlöseschaltungen 123 und 223 gebildeten gemeinsamen Notlöseschaltung 23 schaltbar. Ferner weisen die zu den Bremsaktuatoren 6 eines Radsatzes RS führenden Bremsdruckpfade im Zuge eines ihnen gemeinsamen Abschnittes VL8, VL11 zur Gleitschutzkorrektur des Bremsdruckes B eine Gleitschutzventileinrichtung 24 auf, so wie diese beispielsweise auch aus der eingangs genannten Druckschrift WO 2005/110830 A1 bekannt ist.

Jede der Notlöseventileinrichtungen 22 weist neben dem Ventil 21 eine dem Ventil zugeordnete Betätigungseinrichtung 25 auf.

Jede der Betätigungseinrichtungen 25 weist zwei Betätigungselemente R1, R2 in Form von elektromechanischen Antrieben (hier ausgebildete als Relaisspulen mit Anker), zwei Schaltkontakte K1, K2 in Form von Schließern, vier Verbindungsleitungen V1, V2, V3, V4 und vier Steuereingänge E1, E2, E3, E4 auf.

Die beiden Notlöseschaltungen 123 und 223 sind im Wesentlichen gleich ausgebildet, so dass im Weiteren die wesentlichen Bestandteile dieser Schaltungen und ihr Zusammenwirken mit den Notlöseventileinrichtungen 22 anhand der Notlöseschaltung 123 näher beschrieben sind.

Die Notlöseschaltung 123 weist zwei manuell betätigbare Betätigungsmittel S1 und S2, ein durch Ankupplung des weiteren Fahrzeuges 201 betätigbares Betätigungsmittel S3, zwei Notlösesteuerleitungen NL1 und NL2, eine Versorgungsleitung VL, eine Bezugspotentialleitung L, Sicherungen F1, F2 und F3, Kontakte in Form von Schließern k1 bis k15 und Öffnern k16 bis k32, elektromechanische Antriebe R3 bis R8 - hier ausgebildet als Relaisspulen mit Anker - zum Betätigen der Kontakte, sowie eine SIBAS KLIP Station mit Eingabemitteln DE1 bis DE10 in Form von KLIP-Eingängen und einem Ausgabemittel DA1 in Form eines KLIP-Ausganges auf. Dabei ist "SIBAS" die Abkürzung für "Siemens Bahn Automatisierungs System" und "KLIP" die Abkürzung für "Klemme für intelligente Peripherieanbindung". Die Spannungsversorgung der digitalen KLIP-Eingänge DE1 bis DE10 mit einer Spannung U erfolgt über eine hier nicht gezeigte Spannungsversorgung der gesamten SIBAS KLIP Station.

Die Notlösesteuerleitung NL1 weist zwischen Eingängen E5 und E6 einen Abschnitt auf, in dem die Kontakte k24 und k25 in Reihe geschaltet sind. Und die Notlösesteuerleitung NL2 weist zwischen Eingängen E7 und E8 einen Abschnitt auf, in dem die Kontakte k26 und k27 in Reihe geschaltet sind.

Der Steuereingang E1 der Notlöseventileinrichtungen 22 ist über die Verbindungsleitung V1 mit der Notlösesteuerleitung NL1 der Notlöseschaltung 23 verbunden. Der Steuereingang E2 der Notlöseventileinrichtungen 22 ist über die Verbindungsleitung V2 mit der Notlöseleitung NL2 der Notlöseschaltung 23 verbunden. Der Steuereingang E3 ist über die Verbindungsleitung V3 mit der Bezugspotentialleitung L verbunden und der Steuereingang E4 ist über die Verbindungsleitung V4 ebenfalls mit der Bezugspotentialleitung L verbunden.

Das eine Betätigungselement R1 steht in Wirkverbindung mit den zwei Schaltkontakten K1, K2. Das andere Betätigungselement R2 steht in Wirkverbindung mit dem Ventil 21. Im Zuge der Verbindungsleitungen V2 und V4 ist jeweils einer der Schaltkontakte K1, K2 angeordnet. Außerdem wirkt das Betätigungsmittel R1 des Kopfwagens 2.1 auf den Kontakt k29 und das Betätigungsmittel R1 des Mittelwagens 2.2 wirkt auf den Kontakt k32.

Die Versorgungsleitung VL ist zum Einen über die Verbindungsleitungen V5 und V6 am Eingang E7 und zum Anderen über die Verbindungsleitungen V5, V7, V8, V9 und V10 am Eingang E8 mit der Notlösesteuerleitung NL2 elektrisch verbunden. Im Zuge der Verbindungsleitung V6 sind die Kontakte k5 und k9 angeordnet und im Zuge der Verbindungsleitung V10 sind die Kontakte k8 und k31 angeordnet. Im Zuge der Verbindungsleitung V5 ist die Sicherung F2 angeordnet.

Ferner ist die Versorgungsleitung VL zum Einen über die Verbindungsleitungen V5, V7 und V11 am Eingang E5 und zum Anderen über die Verbindungsleitungen V5, V7, V8, V9 und V12 am Eingang E6 mit der Notlösesteuerleitung NL1 verbunden. Im Zuge der Verbindungsleitung V11 sind die Kontakte k6 und k10 angeordnet und im Zuge der Verbindungsleitung V12 sind die Kontakte k7 und k30 angeordnet.

Außerdem weisen die beiden Notlösesteuerleitungen NL1 und NL2 jeweils 3 elektrische Verbindungen zu der Bezugspotentialleitung L auf.

So ist die Notlösesteuerleitung NL1 einerseits über die Verbindungsleitung V13, andererseits über die Verbindungsleitung V14 und zusätzlich über die Verbindungsleitungen V17 und V18 mit der Bezugspotentialleitung L verbunden. Im Zuge der Verbindungsleitung V13 ist der Kontakt k12 angeordnet. Im Zuge der Verbindungsleitung V14 ist der Kontakt k13 angeordnet. Und im Zuge der Verbindungsleitung V17 ist der Kontakt k3 angeordnet.

Die Notlösesteuerleitung NL2 ist einerseits über die Verbindungsleitung V15, andererseits über die Verbindungsleitung V16 und zusätzlich über die Verbindungsleitung V19 und V18 mit der Bezugspotentialleitung L verbunden. Im Zuge der Verbindungsleitung V15 ist der Kontakt k11 angeordnet. Im Zuge der Verbindungsleitung V16 ist der Kontakt k14 angeordnet. Und im Zuge der Verbindungsleitung V19 ist der Kontakt k4 angeordnet.

Das erste Betätigungsmittel S1 besteht aus drei Schalterblöcken. In einer AUS-Stellung S1.0 ist der mittlere Schalterblock geschlossen (vgl. Figuren 2 und 3), sein Eingang über eine Verbindungsleitung V20 mit der Versorgungsleitung VL verbunden und sein Ausgang über eine Verbindungsleitung V21 mit der Bezugspotentialleitung L verbunden.

In einer ersten EIN-Stellung S1.1 ist der rechte Schalterblock geschlossen (vgl. gestrichelte Linie in Figur 3), sein Eingang über Verbindungsleitungen V20 und V22 mit der Versorgungsleitung VL verbunden und sein Ausgang über Verbindungsleitungen V23 und V24 mit der Bezugspotentialleitung L verbunden.

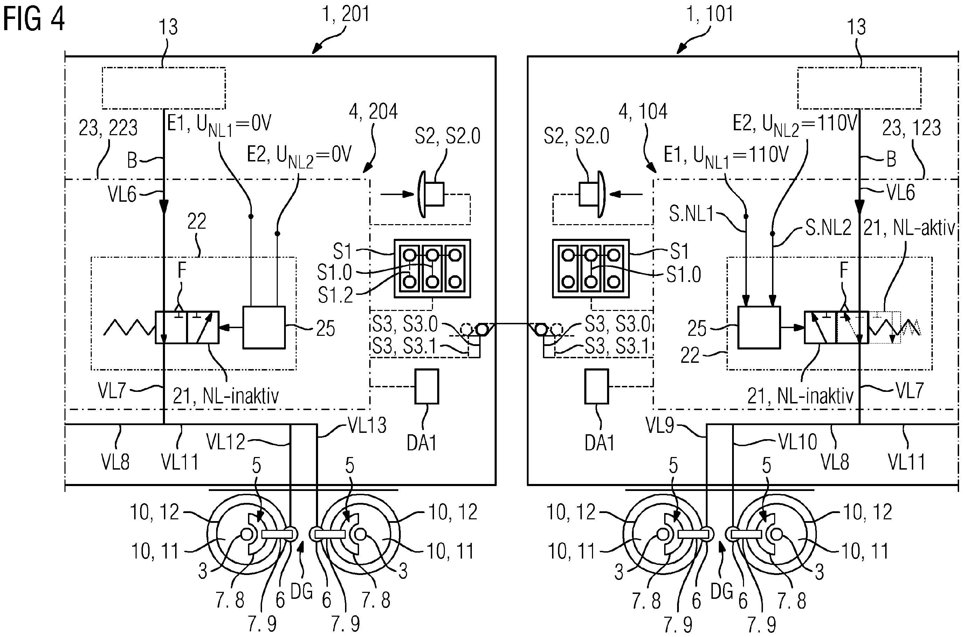

In einer zweiten EIN-Stellung S1.2 ist der linke Schalterblock geschlossen (vgl. gestrichelte Linie in Figur 4), sein Eingang über Verbindungsleitungen V20 und V25 mit der Versorgungsleitung verbunden und sein Ausgang über Verbindungsleitungen V26 und V24 mit der Bezugspotentialleitung L verbunden.

Im Zuge der Verbindungsleitung V21 ist die Relaisspule R3 angeordnet, deren Anker die Kontakte k2, k19, k22, k30 und k31 betätigt.

Im Zuge der Verbindungsleitung V23 ist die Relaisspule R4 angeordnet, deren Anker die Kontakte k18, k24, k26, k7 und k8 betätigt.

Im Zuge der Verbindungsleitung V26 ist die Relaisspule R5 angeordnete, deren Anker die Kontakte k17, k5, k6, k21, k25 und k27 betätigt.

Das zweite Betätigungsmittel S2 ist ein Pilzschlagtaster, der bei seiner Betätigung - also beim Überführen aus einer AUS-Stellung S2.0 in eine EIN-Stellung S2.1 - auf die Kontakte k1, k3 und k4 wirkt.

Das dritte Betätigungsmittel S3 wird beim Aneinanderkuppeln der beiden Fahrzeuge 101 und 201 betätigt und dabei aus einer AUS-Stellung S3.0 in eine EIN-Stellung S3.1 überführt (vgl. Figur 3). Das dritte Betätigungsmittel S3 wirkt bei seiner Betätigung auf den Kontakt k15 (Kuppelkontakt).

Der Kontakt k15 ist im Zuge einer Verbindungsleitung V27 angeordnet, die die Versorgungsleitung VL mit der Bezugspotentialleitung L verbindet. Im Zuge der Verbindungsleitung V27 ist auch die Relaisspule R6 angeordnet, deren Anker die Kontakte k16 sowie k9 und k10 betätigt. Ferner ist im Zuge der Verbindungsleitung V27 die Sicherung F3 angeordnet.

Der KLIP-Ausgang DA1 ist im Zuge einer Verbindungsleitung V28 angeordnet, die die Versorgungsleitung VL mit der Bezugspotentialleitung L verbindet. Im Zuge der Verbindungsleitung V28 ist auch die Relaisspule R7 angeordnet, deren Anker die Kontakte k11, k12, k23, k13 und k14 betätigt. Ferner ist im Zuge der Verbindungsleitung V23 die Sicherung F1 angeordnet.

Im Zuge einer Verbindungsleitung V29, die die Notlösesteuerleitung NL2 mit der Bezugspotentialleitung L verbindet, ist die Relaisspule R8 angeordnet, deren Anker den Kontakt k28 betätigt. Die Kontakte k16, k1, k17, k18, k2, k28, k29 und k32 sind im Zuge der Verbindungsleitungen V31 bis V38 angeordnet, über die die KLIP-Eingänge DE1 bis DE8 an die Spannungsversorgung der KLIP-Station angeschlossen sind.

Das Bremssteuergerät 16 jedes Wagens 2.1 und 2.2 ist über Verbindungsleitungen V39 und V40 parallel zu dem Betätigungselement R2 des jeweiligen Wagens geschaltet, wobei an die Verbindungsleitung V39 des Kopfwagens 2.1 der KLIP-Eingang DE9 angeschlossen ist und wobei an die Verbindungsleitung V39 des Mittelwagens 2.2 der KLIP-Eingang DE10 angeschlossen ist.

Das Zusammenwirken der Bremsanordnungen 13 des Fahrzeugs 101 (abzuschleppenden Fahrzeug), das mit dem Fahrzeug 201 (abschleppendes Fahrzeug) den Fahrzeugverbund 1 bildet, und der Notlöseventileinrichtungen 22 des Fahrzeugs 101, die mittels der Notlöseschaltung 23; 123 schaltbar ist, wird im Folgenden anhand der Figur 7 in Verbindung mit den Figuren 3 bis 6 näher beschrieben.

Zum Betätigen der ersten Bremsmittel 7 des Fahrzeugs 1 wirkt der von den Ventileinrichtung 20 der Bremsanordnungen 13 ausgesteuerte Bremsdruck B über die Bremsdruckpfade auf die zugeordneten Bremsaktuatoren 6.

Die Notlöseschaltung 23; 123 wird nun aktiviert, indem gemäß Figur 3 das erste Betätigungsmittel S1 des Fahrzeugs 101 in seine erste EIN-Stellung S1.1 (rechter Schalterblock geschlossen) oder gemäß Figur 4 das weitere erste Betätigungsmittel S1 des an das eine Fahrzeug 101 angekuppelten weiteren Fahrzeugs 201 in seine zweite EIN-Stellung S1.2 (linker Schalterblock geschlossen) überführt wird.

Durch dieses Aktivieren der Notlöseschaltung 23; 123 werden die Notlöseventileinrichtungen 22 des Fahrzeugs 101 aus einer inaktiven Schaltposition NL-inaktiv in eine aktive Schaltposition NL-aktiv überführt, in der sie ein Lösen der ersten Bremsmittel 7 von den zweiten Bremsmitteln 10 bewirken.

Die Notlöseschaltung 23; 123 ist also aktivierbar durch Überführen des einen ersten Betätigungsmittels S1 des Fahrzeugs 101 in seine erste EIN-Stellung S1.1 oder durch Überführen des weiteren ersten Betätigungsmittels S1 des an das eine Fahrzeug 101 angekuppelten weiteren Fahrzeugs 201 in seine zweite EIN-Stellung S1.2, wobei sich die Notlöseventileinrichtungen 22 des Fahrzeugs 101 bei derart aktivierter Notlöseschaltung 23; 123 in einer aktiven Schaltposition NL-aktiv befinden, in der sie ein Lösen der ersten Bremsmittel 7 von den zweiten Bremsmitteln 10 bewirken.

Durch das Aktivieren der Notlöseschaltung 23; 123 wird an dem ersten Steuereingang E1 und an dem zweiten Steuereingang E2 der Betätigungseinrichtungen 25 der Notlöseventileinrichtungen 22 des Fahrzeugs 101 jeweils ein vorbestimmtes Steuersignal - hier jeweils in Form eines vorbestimmten Wertes einer Steuerspannung U_{NL1} bzw. U_{NL2} von jeweils 110V - bereitstellt.

Die Notlöseschaltung 23; 123 ist also zum Schalten der Notlöseventileinrichtungen 22 des Fahrzeuges 101 nur dann aktiviert, wenn durch die Notlöseschaltung 23; 123 an dem ersten Steuereingang E1 und an dem zweiten Steuereingang E2 der Betätigungseinrichtungen 25 der Notlöseventileinrichtungen 22 des Fahrzeuges 101 jeweils das vorbestimmte Steuersignal - hier jeweils in Form eines vorbestimmten Wertes einer Steuerspannung U_{NL1} bzw. U_{NL2} von jeweils 110V - bereitgestellt ist.

Dadurch, dass zum Notlösen an beiden Steuereingängen E1 und E2 das jeweilige Steuersignal anliegen muss, kann ein ungewolltes Notlösen beim Anliegen nur eines der beiden Steuersignale sicher verhindert werden.

Da die Parkbremseinrichtung 18 über separate Verbindungsleitungen auf die Bremsaktuatoren 6 wirkt, ist die Parkbremse auch bei aktivierter Notlöseschaltung 23; 123 nicht außer Kraft gesetzt.

Befindet sich das erste Betätigungsmittels S1 des Fahrzeugs 101 in seiner Aus-Stellung S1.0 (mittlerer Schalterblock ist geschlossen; in Figur 3 dargestellt mittels Volllinie), so ist der Schalter k2 durch den elektromechanischen Antrieb R3 geschlossen und die Schalter k19, k22, k30 und k31 sind durch den elektromechanischen Antrieb R3 geöffnet. Somit liegt an den beiden Notlösesteuerleitungen NL1 und NL2 des Fahrzeuges 101 nicht die Spannung der Versorgungsleitung VL des Fahrzeuges 101 in Höhe von 110V an. Da ferner durch die Relaisspule des elektromechanischen Antriebes R5 kein Strom fließt, sind auch die Kontakte k17, k21, k25 und k27 geschlossen und die Kontakte k5 und k6 sind offen, so dass auch an den beiden Notlösesteuerleitungen NL1 und NL2 des Fahrzeuges 201 nicht die Spannung der Versorgungsleitung VL des Fahrzeuges 101 in Höhe von 110V anliegt.

Gleiches gilt für das Fahrzeug 201. Befindet sich also das erste Betätigungsmittels S1 des Fahrzeugs 201 in seiner Aus-Stellung S1.0 (mittlerer Schalterblock ist geschlossen; in Figur 3 dargestellt mittels Volllinie), so liegt die Spannung der Versorgungsleitung VL des abschleppenden Fahrzeugs 201 weder an den beiden Notlösesteuerleitungen NL1 und NL2 des abschleppenden Fahrzeuges 201 noch an den beiden Notlösesteuerleitungen NL1 und NL2 des abzuschleppenden Fahrzeuges 101 an.

Befindet sich das erste Betätigungsmittels S1 des Fahrzeugs 101 in seiner ersten EIN-Stellung S1.1 (rechter Schalterblock ist geschlossen; in Figur 3 dargestellt mittel gestrichelter Linie), so sind die Kontakte k18, k24 und k26 durch den elektromechanischen Antrieb R4 geöffnet und die Kontakte k7 und k8 sind durch den elektromechanischen Antrieb R4 geschlossen. Somit liegt nunmehr an den beiden Notlösesteuerleitungen NL1 und NL2 des Fahrzeuges 101 die Spannung der Versorgungsleitung VL des Fahrzeuges 101 in Höhe von 110V an. Das Fahrzeug 101 versorgt seine Notlösesteuerleitungen NL1 und NL2 also selbst mit der notwendigen Spannung. Damit liegt die Spannung in Höhe von 110V der Notlösesteuerleitung NL1 an dem Eingang E1 der Notlöseventileinrichtungen 22 an und die Spannung der Notlösesteuerleitung NL2 in Höhe von 110V liegt an dem Eingang E2 der Notlöseventileinrichtungen 22 an. Daher wird - wie in Figur 3 gezeigt - jede der Notlöseventileinrichtungen 22 des abzuschleppenden Fahrzeugs 101 aus ihrer Schaltposition NL-inaktiv (in Figur 3 dargestellt mittels Volllinie) in ihre Schaltposition NL-aktiv (in Figur 3 dargestellt mittel gestrichelter Linie) überführt. In der Schaltposition NL-aktiv werden die Bremsaktoren 6 des abzuschleppenden Fahrzeugs 101 über den Ausgang F ins Freie entlüftet, so dass sich die ersten Bremsmittel 7 von zweiten Bremsmitteln 10 lösen. Es erfolgt also ein Notlösen der Bremsmittel 1, 10 des abzuschleppenden Fahrzeugs. An den beiden Notlösesteuerleitungen NL1 und NL2 des abschleppenden Fahrzeuges 201 liegt die Spannung der Versorgungsleitung VL des Fahrzeuges 101 in Höhe von 110V jedoch nicht an. Das Fahrzeug 101 versorgt also die Notlösesteuerleitungen NL1 und NL2 des Fahrzeugs 201 nicht mit Spannung, so dass kein Notlösen der Bremsmittel 7, 10 des abschleppenden Fahrzeugs 201 erfolgt.

Würde sich das erste Betätigungsmittels S1 des Fahrzeugs 101 in seiner zweiten EIN-Stellung S1.2 (linker Schalterblock ist geschlossen) befinden, so wären die Kontakte k17, k21, k25 und k27 durch den elektromechanischen Antrieb R5 geöffnet und die Kontakte k5 und k6 wären durch den elektromechanischen Antrieb R5 geschlossen. Somit läge an den beiden Notlösesteuerleitungen NL1 und NL2 des Fahrzeuges 201 die Spannung der Versorgungsleitung VL des Fahrzeuges 101 in Höhe von 110V an. Das Fahrzeug 101 würde also die Notlösesteuerleitungen NL1 und NL2 des Fahrzeugs 201 mit Spannung versorgen. Damit läge die Spannung in Höhe von 110V der Notlösesteuerleitung NL1 an dem Eingang E1 der Notlöseventileinrichtungen 22 des Fahrzeugs 201 an und die Spannung der Notlösesteuerleitung NL2 in Höhe von 110V läge an dem Eingang E2 der Notlöseventileinrichtungen 22 des Fahrzeugs 201 an. - Gleiches gilt für das abschleppende Fahrzeug 201. Befindet sich also das erste Betätigungsmittels S1 des abschleppenden Fahrzeugs 201 in seiner zweiten EIN-Stellung S1.2 (linker Schalterblock ist geschlossen; in Figur 4 dargestellt mittels gestrichelter Linie), so liegt an den beiden Notlösesteuerleitungen NL1 und NL2 des abzuschleppenden Fahrzeugs 101 die Spannung der Versorgungsleitung VL des abschleppenden Fahrzeuges 201 in Höhe von 110V an. Das abschleppende Fahrzeug 201 versorgt also die Notlösesteuerleitungen NL1 und NL2 des abzuschleppenden Fahrzeugs 101 mit der notwendigen Spannung. Damit liegt die Spannung in Höhe von 110V der Notlösesteuerleitung NL1 an dem Eingang E1 der Notlöseventileinrichtungen 22 des anzuschleppenden Fahrzeugs 101 an und die Spannung der Notlösesteuerleitung NL2 in Höhe von 110V liegt an dem Eingang E2 der Notlöseventileinrichtungen 22 des anzuschleppenden Fahrzeugs 101 an. Daher wird - wie in Figur 4 gezeigt - jede der Notlöseventileinrichtungen 22 des abzuschleppenden Fahrzeugs 101 aus ihrer Schaltposition NL-inaktiv (in Figur 4 dargestellt mittels Volllinie) in ihre Schaltposition NL-aktiv (in Figur 4 dargestellt mittel gestrichelter Linie) überführt. In der Schaltposition NL-aktiv werden die Bremsaktoren 6 des abzuschleppenden Fahrzeugs 101 über den Ausgang F ins Freie entlüftet, so dass sich die ersten Bremsmittel 7 von zweiten Bremsmitteln 10 lösen. Es erfolgt also ein Notlösen der Bremsmittel 7, 10 des abzuschleppenden Fahrzeugs. An den beiden Notlösesteuerleitungen NL1 und NL2 des abschleppenden Fahrzeuges 201 liegt die Spannung der Versorgungsleitung VL des abschleppenden Fahrzeuges 201 in Höhe von 110V jedoch nicht an. Das Fahrzeug 201 versorgt also seine Notlösesteuerleitungen NL1 und NL2 nicht mit Spannung, so dass kein Notlösen der Bremsmittel 7, 10 des abschleppenden Fahrzeugs 201 erfolgt.

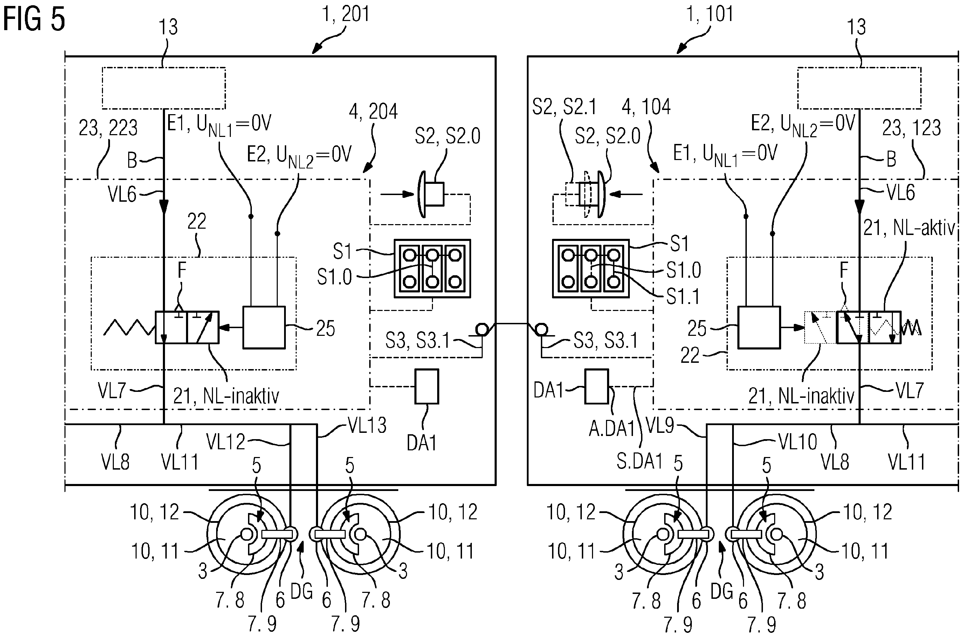

Beim Abschleppen des Fahrzeugs 101 durch das Fahrzeug 201 kann die Fahrtrichtung des Fahrzeugverbundes 1 so gewählt sein, dass das abzuschleppende Fahrzeug 101 in der Fahrtrichtung das führende Fahrzeug des Fahrzeugverbundes ist. Daher besteht die Möglichkeit, dass der Fahrzeugführer des abschleppenden Fahrzeugs 201Gefahrensituationen nicht erkennt, wohl aber der Fahrzeugführer des abzuschleppenden Fahrzeugs 101. Das erfindungsgemäße Bremssystem gibt dem Fahrzeugführer des abzuschleppenden Fahrzeugs 101 die Möglichkeit, auf Gefahrensituationen zu reagieren, indem er gemäß Figur 5 durch die Betätigung des zweiten Betätigungsmittels S2 die Notlöseschaltung 23; 123 wieder deaktiviert.

Natürlich kann die Notlöseschaltung 23; 123 auch deaktiviert werden, indem das in seiner EIN-Stellung S1.1 bzw. S1.2 befindliche erste Betätigungsmittel S1 wieder in seine AUS-Stellung S1.0 überführt - also der mittlere Schalterblock geschlossen wird.

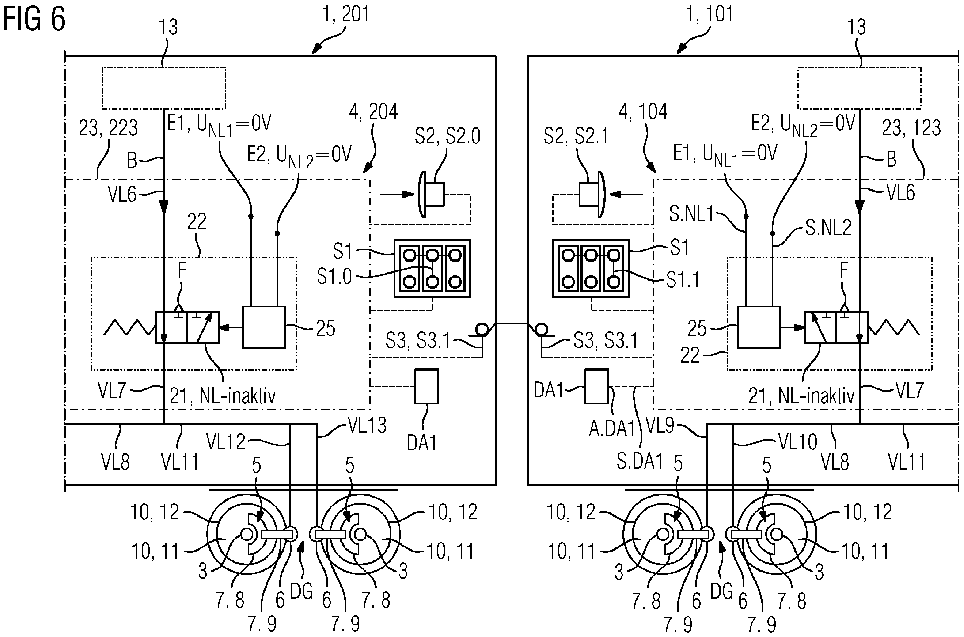

Gemäß Figur 5 wird die aktivierte Notlöseschaltung 23; 123 also deaktiviert, indem das zweites Betätigungsmittel S2 des abzuschleppenden Fahrzeugs 101 aus seiner AUS-Stellung S2.0 (in Figur 5 dargestellt mittel Volllinie) in seine EIN-Stellung S2.1 (in Figur 5 dargestellt mittels gestrichelter Linie) überführt wird, wobei die Notlöseventileinrichtungen 22 des abzuschleppenden Fahrzeugs durch dieses Deaktivieren der Notlöseschaltung 23; 123 in ihre inaktive Schaltposition NL-inaktiv überführt werden, in der sie einen Reibschluss der ersten Bremsmittel 7 mit den zweiten Bremsmitteln 10 zulassen (vgl. Figur 6).

Die aktivierte Notlöseschaltung 23; 123 ist also deaktivierbar durch Überführen des zweiten Betätigungsmittels S2 des abzuschleppenden Fahrzeugs 101 in seine EIN-Stellung S2.1 und bei derart deaktivierter Notlöseschaltung 23; 123 befinden sich die Notlöseventileinrichtungen 22 des abzuschleppenden Fahrzeugs 101 in einer inaktiven Schaltposition NL-inaktiv, in der sie einen Reibschluss der ersten Bremsmittel 7 mit den zweiten Bremsmitteln 10 zulassen.

Durch das Deaktivieren der Notlöseschaltung 23; 123 mittels des zweiten Betätigungsmittels S2 werden die beiden Steuereingänge E1 und E2 kurzgeschlossen und ihre Verbindung zu der speisenden Versorgungsleitung VL (Spannungsversorgungsleitung) wird unterbrochen, so dass an den beiden Steuereingängen E1 und E2kein Steuersignal, also keine Steuerspannung, mehr anliegt. Denn beim Betätigen des zweiten Betätigungsmittels S2 werden die Kontakte k1 sowie k3 und k4 geschlossen und die Notlösesteuerleitungen NL1 und NL2 des abzuschleppenden Fahrzeugs 101 kurzgeschlossen. Bei in seiner ersten EIN-Stellung S1.1 befindlichen ersten Betätigungsmittel S1 des abzuschleppenden Fahrzeugs 101 spricht dabei die Sicherung F2 des abzuschleppenden Fahrzeugs an. Bei in seiner zweiten EIN-Stellung S1.2 befindlichen ersten Betätigungsmittel S1 des abschleppenden Fahrzeugs 201 spricht dabei die hier nicht gezeigte Sicherung F2 des abschleppenden Fahrzeugs 201 an.

Außerdem kann die aktivierte Notlöseschaltung 23; 123 gemäß Figur 5 durch ein Steuersignal S.DA1 des Ausgabemittels DA1 deaktiviert werden, das an einem Ausgang A.DA1 des Ausgabemittels DA1 ausgegeben wird. Denn bei Ausgabe des Steuersignals S.DA1 wird die Relaisspule R7 bestromt und dadurch werden die Kontakte k11, k12, k13 und k14 geschlossen und der Kontakt k23 geöffnet. Die Notlösesteuerleitungen NL1 und NL2 des abzuschleppenden Fahrzeugs 101 werden also kurzgeschlossen. Bei in seiner ersten EIN-Stellung S1.1 befindlichen ersten Betätigungsmittel S1 des abzuschleppenden Fahrzeugs 101 spricht dabei wieder die Sicherung F2 des abzuschleppenden Fahrzeugs an. Bei in seiner zweiten EIN-Stellung S1.2 befindlichen ersten Betätigungsmittel S1 des abschleppenden Fahrzeugs 201 spricht dabei wieder die hier nicht gezeigte Sicherung F2 des abschleppenden Fahrzeugs 201 an.

Außerdem löst sowohl die Betätigung des zweiten Betätigungsmittels S2 als auch die Ausgabe des Steuersignal S.DA1 in hier nicht gezeigter Weise auch eine Notbremsung aus. Es wird also nicht nur das Notlösen aufgehoben, sondern zugleich auch eine Notbremsung eingeleitet.

## Patentansprüche

1. Bremssystem (4), bei dem zum Betätigen von ersten Bremsmitteln (7) eines Fahrzeugs (101), welches eine Notlöseschaltung (123) aufweist, ein von einer Bremsanordnung (13) ausgesteuerter Bremsdruck (B) über einen Bremsdruckpfad (VL6, VL7, VL8, VL9; VL6, VL7, VL8, VL10; VL6, VL7, VL11, VL12; VL6, VL7, VL11, VL13) auf einen Bremsaktuator (6) wirkt,
**dadurch gekennzeichnet,**
**dass** aus der Notlöseschaltung (123) des einen Fahrzeugs (101), welches ein abzuschleppendes Fahrzeug eines Fahrzeugverbundes (1) ist, und einer Notlöseschaltung (223) eines an das eine Fahrzeug (101) gekuppelten weiteren Fahrzeugs (201), welches ein abschleppendes Fahrzeug des Fahrzeugverbundes (1) ist, eine gemeinsame Notlöseschaltung (23) als Teil des Bremssystems gebildet ist, dass eine mittels der gemeinsamen Notlöseschaltung (23) schaltbare Notlöseventileinrichtung (22) im Zuge des Bremsdruckpfades des abzuschleppenden Fahrzeugs (101) angeordnet ist und
**dass** die gemeinsame Notlöseschaltung (23) aktivierbar ist durch Überführen eines ersten Betätigungsmittels (S1) des abzuschleppenden Fahrzeugs (101) in eine erste EIN-Stellung (S1.1) und alternativ durch Überführen eines weiteren ersten Betätigungsmittels (S1) des abschleppenden Fahrzeugs (201) in eine zweite EIN-Stellung (S1.2), wobei sich die Notlöseventileinrichtung (22) bei derart aktivierter gemeinsamer Notlöseschaltung (23) in einer ersten Schaltposition (NL-aktiv) befindet, in der sie ein Lösen der ersten Bremsmittel (7) von zweiten Bremsmitteln (10) bewirkt.

2. Bremssystem (4) nach Anspruch 1,
**dadurch gekennzeichnet, dass**
die gemeinsame Notlöseschaltung (23) zum Schalten der Notlöseventileinrichtung (22) aktiviert ist, wenn durch die gemeinsame Notlöseschaltung (23) an einem ersten Steuereingang (E1) und an einem zweiten Steuereingang (E2) einer Betätigungseinrichtung (25) der Notlöseventileinrichtung (22) jeweils ein vorbestimmtes Steuersignal (S.NL1, S.NL2), insbesondere ein vorbestimmter Wert einer Steuerspannung (U_{NL1}=110V, U_{NL2}=110V), bereitgestellt ist.

3. Bremssystem (4) nach Anspruch 2,
**dadurch gekennzeichnet, dass**
die Betätigungseinrichtung (25) einen dritten mit einer Bezugspotentialleitung (L) verbundenen Steuereingang (E3), einen vierten mit der Bezugspotentialleitung (L) verbundenen Steuereingang (E4) und zwei Betätigungselemente (R1, R2) aufweist,
wobei ein erstes (R1) der Betätigungselemente, das in Wirkverbindung mit zwei Schaltkontakten (K1, K2) steht, über Verbindungsleitungen (V1, V3) mit dem ersten Steuereingang (E1) und dem dritten Steuereingang (E3) verbunden ist und das andere Betätigungselement (R2), das in Wirkverbindung mit einem im Zuge des Bremsdruckpfades angeordneten Ventil (21) der Notlöseventileinrichtung (22) steht, über weitere Verbindungsleitungen (V2, V4) mit dem zweiten Steuereingang (E2) und dem vierten Steuereingang (E4) verbunden ist und
wobei im Zuge der weiteren Verbindungsleitungen (V2, V4) jeweils einer der Schaltkontakte (K1, K2) angeordnet ist.

4. Bremssystem (4) nach einem der Ansprüche 1 bis 3,
**dadurch gekennzeichnet, dass**
die derart aktivierte gemeinsame Notlöseschaltung (23) deaktivierbar ist durch Überführen eines zweiten Betätigungsmittels (S2) des abzuschleppenden Fahrzeugs (101) in eine EIN-Stellung (S2.1) oder durch Ausgabe eines Steuersignals (S.DA1) an einem Ausgang eines Ausgabemittels (DA1) des abzuschleppenden Fahrzeugs (101), wobei sich die Notlöseventileinrichtung (22) bei derart deaktivierter gemeinsamer Notlöseschaltung (23) in einer zweiten Schaltposition (NL-inaktiv) befindet, in der sie einen Reibschluss der ersten Bremsmittel (7) mit den zweiten Bremsmitteln (10) zulässt.

5. Bremssystem (4) nach Anspruch 4,
**dadurch gekennzeichnet, dass**
bei derart deaktivierter gemeinsamer Notlöseschaltung (23) die beiden Steuereingänge (E1, E2) kurzgeschlossen sind und ihre Verbindung zu einer Versorgungsleitung (VL), insbesondere einer Spannungsversorgungsleitung, unterbrochen ist, so dass an den beiden Steuereingängen (E1, E2) kein Steuersignal, insbesondere keine Steuerspannung (U_{NL1}=0V, U_{NL2}=0V), mehr anliegt.

6. Fahrzeugverbund (1), insbesondere Schienenfahrzeugverbund, mit einem Bremssystem (4),
**dadurch gekennzeichnet, dass**
das Bremssystem (4) nach einem der Ansprüche 1 bis 5 ausgebildet ist.

7. Verfahren zum Steuern eines Bremssystems (4) bei dem zum Betätigen von ersten Bremsmitteln (7) eines Fahrzeugs (101), welches eine Notlöseschaltung (123) aufweist, ein von einer Bremsanordnung (13) ausgesteuerter Bremsdruck (B) über einen Bremsdruckpfad (VL6, VL7, VL8, VL9; VL6, VL7, VL8, VL10; VL6, VL7, VL11, VL12; VL6, VL7, VL11, VL13) auf einen Bremsaktuator (6) wirkt,
wobei aus der Notlöseschaltung (123) des einen Fahrzeugs (101), welches ein abzuschleppendes Fahrzeug eines Fahrzeugverbundes (1) ist, und einer Notlöseschaltung (223) eines an das eine Fahrzeug (101) gekuppelten weiteren Fahrzeugs (201), welches ein abschleppendes Fahrzeug des Fahrzeugverbundes (1) ist, eine gemeinsame Notlöseschaltung (23) gebildet wird,
wobei eine mittels der gemeinsamen Notlöseschaltung (23) schaltbare Notlöseventileinrichtung (22) im Zuge des Bremsdruckpfades des abzuschleppenden Fahrzeugs (101) angeordnet ist, **dadurch gekennzeichnet, dass** die gemeinsame Notlöseschaltung (23) aktiviert wird, indem ein erstes Betätigungsmittel (S1) des abzuschleppenden Fahrzeugs (101) in eine erste EIN-Stellung (S1.1) oder ein weiteres erstes Betätigungsmittels (S1) des abschleppenden Fahrzeugs (201) in eine zweite EIN-Stellung (S1.2) überführt wird, und
dass die Notlöseventileinrichtung (22) durch dieses Aktivieren der gemeinsamen Notlöseschaltung (23) in eine erste Schaltposition (NL-aktiv) überführt wird, in der sie ein Lösen der ersten Bremsmittel (7) von zweiten Bremsmitteln (10) bewirkt.

8. Verfahren nach Anspruch 7,
**dadurch gekennzeichnet, dass**
durch das Aktivieren der gemeinsamen Notlöseschaltung (23) an einem ersten Steuereingang (E1) und an einem zweiten Steuereingang (E2) einer Betätigungseinrichtung (25) der Notlöseventileinrichtung (22) jeweils ein vorbestimmtes Steuersignal, insbesondere ein vorbestimmter Wert einer Steuerspannung (U_{NL1}=110V, U_{NL2}=110V) bereitgestellt wird.

9. Verfahren nach einem der Ansprüche 7 oder 8 ,
**dadurch gekennzeichnet, dass**
die derart aktivierte gemeinsame Notlöseschaltung (23) deaktiviert wird, indem ein zweites Betätigungsmittel (S2) des abzuschleppenden Fahrzeugs (101) in eine EIN-Stellung (S2.1) überführt wird oder indem ein Steuersignals (S.DA1) an einem Ausgang (A.DA1) eines Ausgabemittels (DA1) des abzuschleppenden Fahrzeugs (101) ausgegeben wird,
wobei die Notlöseventileinrichtung (22) durch dieses Deaktivieren der gemeinsamen Notlöseschaltung (23) in eine zweite Schaltposition (NL-inaktiv) überführt wird, in der sie einen Reibschluss der ersten Bremsmittel (7) mit den zweiten Bremsmitteln (10) zulässt.

10. Verfahren nach Anspruch 9,
**dadurch gekennzeichnet, dass**
durch das Deaktivieren der gemeinsamen Notlöseschaltung (23) mittels des zweiten Betätigungsmittels (S2) oder mittels des Ausgabemittels (DA1) die beiden Steuereingänge (E1, E2) kurzgeschlossen werden und ihre Verbindung zu einer Versorgungsleitung (VL), insbesondere einer Spannungsversorgungsleitung, unterbrochen wird, so dass an den beiden Steuereingängen (E1, E2) kein Steuersignal, insbesondere keine Steuerspannung (U_{NL1}=0V, U_{NL2}=0V), mehr anliegt.

## Claims

1. Braking system (4), in which, in order to actuate first braking means (7) of a vehicle (101), which has an emergency release circuit (123), a braking pressure (B) adjusted by a braking arrangement (13) acts on a braking actuator (6) via a braking pressure path (VL6, VL7, VL8, VL9; VL6, VL7, VL8, VL10; VL6, VL7, VL11, VL12; VL6, VL7, VL11, VL13),
**characterised in that**
a common emergency release circuit (23) is formed as part of the braking system from the emergency release circuit (123) of the one vehicle (101), which is a vehicle to be towed of a group of vehicles (1), and an emergency release circuit (223) of a further vehicle (201) coupled to the one vehicle (101), which is a towing vehicle of the group of vehicles (1), such that an emergency release valve facility (22), which can be switched by means of the common emergency release circuit (23), is arranged in the course of the braking pressure path of the vehicle (101) to be towed and
that the common emergency release circuit (23) can be activated by transferring a first actuation means (S1) of the vehicle (101) to be towed into an ON position (S1.1) and alternatively by transferring a further first actuation means (S1) of the towing vehicle (201) into a second ON position (S1.2),
wherein, when the common emergency release circuit (23) is activated in this way, the emergency release valve facility (22) is situated in a first switching position (NL active), in which it causes a release of the first braking means (7) from second braking means (10).

2. Braking system (4) according to claim 1,
**characterised in that**
the common emergency release circuit (23) for switching the emergency release valve facility (22) is activated when a predetermined control signal (S.NL1, S.NL2), in particular a predetermined value of a control voltage (U_{NL1}=110V, U_{NL2}=110V), is provided by the common emergency release circuit (23) at a first control input (E1) and at a second control input (E2) of an actuation facility (25) of the emergency release valve facility (22) in each case.

3. Braking system (4) according to claim 2,
**characterised in that**
the actuation facility (25) has a third control input (E3) connected to a reference potential line (L), a fourth control input (E4) connected to the reference potential line (L) and two actuation elements (R1, R2),
wherein a first (R1) of the actuation elements, which is actively connected to two switching contacts (K1, K2), is connected to the first control input (E1) and the third control input (E3) via connection lines (V1, V3) and the other actuation element (R2), which is actively connected to a valve (21) arranged in the course of the braking pressure path of the emergency release valve facility (22), is connected to the second control input (E2) and the fourth control input (E4) via further connection lines (V2, V4) and
wherein one of the switching contacts (K1, K2) is arranged in the course of each of the further connection lines (V2, V4).

4. Braking system (4) according to one of claims 1 to 3,
**characterised in that**
the common emergency release circuit (23) activated in this way can be deactivated by transferring a second actuation means (S2) of the vehicle (101) to be towed into an ON position (S2.1) or by outputting a control signal (S.DA1) at an output of an output means (DA1) of the vehicle (101) to be towed, wherein, when the common emergency release circuit (23) is deactivated in this way, the emergency release valve facility (22) is situated in a second switching position (NL inactive), in which it permits a frictional connection of the first braking means (7) to the second braking means (10).

5. Braking system (4) according to claim 4,
**characterised in that**,
when the common emergency release circuit (23) is deactivated in this way, the two control inputs (E1, E2) are short-circuited and their connection to a supply line (VL), in particular a voltage supply line, is interrupted, so that a control signal, in particular a control voltage (U_{NL1}=0V, U_{NL2}=0V), is no longer applied at the two control inputs (E1, E2).

6. Group of vehicles (1), in particular group of rail vehicles, with a braking system (4),
**characterised in that**
the braking system (4) is embodied according to one of claims 1 to 5.

7. Method for controlling a braking system (4) in which, in order to actuate first braking means (7) of a vehicle (101), which has an emergency release circuit (123), a braking pressure (B) adjusted by a braking arrangement (13) acts on a braking actuator (6) via a braking pressure path (VL6, VL7, VL8, VL9; VL6, VL7, VL8, VL10; VL6, VL7, VL11, VL12; VL6, VL7, VL11, VL13),
wherein a common emergency release circuit (23) is formed from the emergency release circuit (123) of the one vehicle (101), which is a vehicle to be towed of a group of vehicles (1), and an emergency release circuit (223) of a further vehicle (201) coupled to the one vehicle (101), which is a towing vehicle of the group of vehicles (1), wherein an emergency release valve facility (22), which can be switched by means of the common emergency release circuit (23), is arranged in the course of the braking pressure path of the vehicle (101) to be towed,
**characterised in that**
the common emergency release circuit (23) is activated by a first actuation means (S1) of the vehicle (101) to be towed being transferred into an ON position (S1.1) or a further first actuation means (S1) of the towing vehicle (201) being transferred into a second ON position (S1.2), and that this activation of the common emergency release circuit (23) causes the emergency release valve facility (22) to be transferred into a first switching position (NL active), in which it causes a release of the first braking means (7) from second braking means (10).

8. Method according to claim 7,
**characterised in that**
the activation of the common emergency release circuit (23) causes a predetermined control signal, in particular a predetermined value of a control voltage (U_{NL1}=110V, U_{NL2}=110V), to be provided at a first control input (E1) and at a second control input (E2) of an actuation facility (25) of the emergency release valve facility (22) in each case.

9. Method according to one of claims 7 or 8,
**characterised in that**
the common emergency release circuit (23) activated in this way is deactivated by a second actuation means (S2) of the vehicle (101) to be towed being transferred into an ON position (S2.1) or by a control signal (S.DA1) being output at an output (A.DA1) of an output means (DA1) of the vehicle (101) to be towed,
wherein this deactivation of the common emergency release circuit (23) causes the emergency release valve facility (22) to be transferred into a second switching position (NL inactive), in which it permits a frictional connection of the first braking means (7) to the second braking means (10) .

10. Method according to claim 9,
**characterised in that**
the deactivation of the common emergency release circuit (23) by means of the second actuation means (S2) or by means of the output means (DA1) causes the two control inputs (E1, E2) to be short-circuited and their connection to a supply line (VL), in particular a voltage supply line, to be interrupted, so that a control signal, in particular a control voltage (U_{NL1}=0V, U_{NL2}=0V), is no longer applied at the two control inputs (E1, E2).

## Revendications

1. Système (4) de frein, dans lequel, pour l'actionnement de premiers moyens (7) de frein d'un véhicule (101), qui a un circuit (123) de desserrage d'urgence, une pression (B) de frein commandée par un agencement (13) de frein agit sur un actionneur (6) de frein par l'intermédiaire d'un trajet (VL6, VL7, VL8, VL9; VL6, VL7, VL8, VL10; VL6, VL7, VL11, VL12; VL6, VL7, VL11, VL13) de pression de frein,
**caractérisé**
**en ce qu'**il est formé, à partir du circuit (133) de desserrage d'urgence du un véhicule (101), qui est un véhicule à remorquer d'un convoi (1) de véhicule et d'un circuit (223) de serrage d'urgence d'un autre véhicule (201) attelé au un véhicule (101), qui est un véhicule remorquant du convoi (1) de véhicule, un circuit (23) de desserrage d'urgence commun comme partie du système de frein,
**en ce qu'**un dispositif (22) de soupape de desserrage d'urgence pouvant être mis en circuit au moyen du circuit (23) de desserrage d'urgence commun est monté dans le cours du trajet de pression de frein du véhicule (101) à remorquer et
**en ce que** le circuit (23) de desserrage d'urgence commun peut être activé en faisant passer un premier moyen (S1) d'actionnement du véhicule (101) à remorquer dans une première position (S1.1) de marche et, en variante, en faisant passer un autre premier moyen (S1) d'actionnement du véhicule (201) remorquant dans une deuxième position (S1.2) de marche,
le dispositif (22) de soupape de desserrage d'urgence se trouvant, pour un circuit (23) de desserrage d'urgence commun, ainsi activé dans une première position (NL-aktiv) de commutation, dans laquelle il provoque un desserrage du premier moyen (7) de frein par des deuxièmes moyens (10) de frein.

2. Système (4) de frein suivant la revendication 1,
**caractérisé en ce que**
le circuit (23) de desserrage d'urgence commun est activé pour mettre en circuit le dispositif (22) de soupape de desserrage d'urgence, si, par le circuit (23) de desserrage d'urgence commun, il est mis à disposition sur une première entrée (E1) de commande et sur une deuxième entrée (E2) de commande d'un dispositif (25) d'actionnement du dispositif (22) de soupape de desserrage d'urgence, respectivement un signal (S.NL1, S.NL2) de commande déterminé à l'avance, notamment une valeur déterminée à l'avance d'une tension (U_{NL1} = 110V, U_{NL2} = 110V) de commande.

3. Système (4) de frein suivant la revendication 2,
**caractérisé en ce que**
le dispositif (25) d'actionnement a une troisième entrée (E3) de commande reliée à une ligne (L) de potentiel de référence, une quatrième entrée (E4) de commande reliée à la ligne (L) de potentiel de référence et deux éléments (R1, R2) d'actionnement,
dans lequel un premier (R1) des éléments d'actionnement, qui est en liaison d'action avec deux contacts (K1, K2) de coupure, est relié par des lignes (V1, V3) de liaison à la première entrée (E1) de commande et à la troisième entrée (E3) de commande et l'autre élément (R2) d'actionnement, qui est en liaison d'action avec une soupape (21), disposée dans le cours du trajet de pression de frein, du dispositif (22) de soupape de desserrage d'urgence, est relié par d'autres lignes (V2, V4) de liaison à la deuxième entrée (E2) de commande et à la quatrième entrée (E4) de commande et
dans lequel respectivement l'un des contacts (K1, K2) de coupure est monté dans le cours des autres lignes (V2,V4) de liaison.

4. Système (4) de frein suivant l'une des revendications 1 à 3,
**caractérisé en ce que**
le circuit (23) de desserrage d'urgence commun ainsi activé peut être désactivé par mise d'un deuxième moyen (S2) d'actionnement du véhicule (101) à remorquer dans une position (S2.1) de marche ou par émission d'un signal (S.DA1) de commande sur une sortie d'un moyen (DA1) d'émission du véhicule (101) à remorquer, le dispositif (22) de soupape de desserrage d'urgence se trouvant, lorsque le circuit (23) de desserrage d'urgence est ainsi désactivé, dans une deuxième position (NL-inaktiv) de commutation, dans laquelle il autorise une coopération de frottement des premiers moyens (7) de frein avec les deuxièmes moyens (10) de frein.

5. Système (4) de frein suivant la revendication 4,
**caractérisé en ce que**
lorsque le circuit (23) de desserrage d'urgence commun est ainsi désactivé, les deux entrées (E1, E2) de commande sont court-circuitées et leur liaison à une ligne (VL) d'alimentation, notamment à une ligne d'alimentation en tension, est interrompue, de sorte qu'il ne s'applique plus aux deux entrées (E1, E2) de commande aucun signal de commande, notamment de tension (U_{NL1} = 0V, U_{NL2} = 0V) de commande.

6. Convoi (1) de véhicule, notamment convoi de véhicule ferroviaire, ayant un système (4) de frein,
**caractérisé en ce que**
le système (4) de frein est constitué suivant l'une des revendications 1 à 5.

7. Procédé de commande d'un système (4) de frein,
dans lequel, pour l'actionnement de premiers moyens (7) de frein d'un véhicule (101) qui a un circuit (123) de desserrage d'urgence, une pression (B) de frein commandée par un agencement (13) de frein agit sur un actionneur (6) de frein par un trajet (VL6, VL7, VL8, VL9; VL6, VL7, VL8, VL10; VL6, VL7, VL11, VL12; VL6, VL7, VL11, VL13) de pression de frein,
dans lequel on forme un circuit (23) de desserrage d'urgence commun à partir du circuit (123) de desserrage d'urgence du un véhicule (101) qui est un véhicule à remorquer d'un convoi (1) de train et d'un circuit (223) de desserrage d'urgence d'un autre véhicule (201) attelé au un véhicule (101), qui est un véhicule remorquant du convoi (1) de véhicule,
dans lequel un dispositif (22) de soupape de desserrage d'urgence pouvant être mis en circuit au moyen du circuit (23) de desserrage d'urgence commun est monté dans le cours du trajet de pression de frein du véhicule (101) à remorquer,
**caractérisé**
**en ce que** l'on active le circuit (23) de desserrage d'urgence commun en mettant un premier moyen (S1) d'actionnement du véhicule (101) à remorquer dans une première position (S1.1) de marche ou en mettant un autre premier moyen (S1) d'actionnement du véhicule (201) remorquant dans une deuxième position (S1.2) de marche et en ce que l'on met le dispositif (22) de soupape de desserrage d'urgence par l'activation du circuit (23) de desserrage d'urgence commun dans un première position (NL-aktiv) de commutation, dans laquelle il provoque un desserrage des premiers moyens (7) de frein par les deuxièmes moyens (10) de frein.

8. Procédé suivant la revendication 7,
**caractérisé en ce que**
par l'activation du circuit (23) de desserrage d'urgence commun, on applique à une première entrée (E1) de commande et à une deuxième entrée (E2) de commande d'un dispositif (25) d'actionnement du dispositif (22) de soupape de desserrage d'urgence, respectivement un signal de commande déterminé à l'avance, en particulier une valeur déterminée à l'avance d'une tension (U_{NL1} = 110V, U_{NL2} = 110V) de commande.

9. Procédé suivant l'une des revendications 7 ou 8,
**caractérisé en ce que**
on désactive le circuit (23) de desserrage d'urgence commun ainsi activé en mettant un deuxième moyen (S2) d'actionnement du véhicule (101) à remorquer dans une position (S2.1) de marche ou en émettant un signal (S.DA1) de commande à une sortie (A.DA1) d'un moyen (DA1) ce sortie du véhicule (101) à remorquer,
dans lequel on met le dispositif (22) de soupape de desserrage d'urgence, par cette désactivation du circuit (23) de desserrage d'urgence commun, dans une deuxième position (NL-inaktiv) de commutation, dans laquelle il autorise une coopération de frottement des premiers moyens (7) de frein avec les deuxièmes moyens (10) de frein.

10. Procédé suivant la revendication 9,
**caractérisé en ce que**
par la désactivation du circuit (23) de desserrage d'urgence commun au moyen du deuxième moyen (S2) d'actionnement ou au moyen du moyen (DA1) de sortie, on court-circuite les deux entrées (E1, E2) de commande et on interrompt leur liaison avec une ligne (VL) d'alimentation, notamment une ligne d'alimentation en tension, de manière qu'un signal de commande, notamment une tension (U_{NL1} = 0V, U_{NL2} = 0V) de commande, ne s'applique plus aux deux entrées (E1, E2) de commande.
